# FASCICULE DE BREVET EUROPEEN

(11) **EP 2 796 807 B1**
(45) Date de publication et mention de la délivrance du brevet: **18.07.2018**
(21) Numéro de dépôt: 14165073.9
(22) Date de dépôt: 17.04.2014
(51) Int. Cl.: F24H 9/20, F23J 15/06, F23N 1/08, F24D 19/10, F28D 21/00, F24H 8/00

(54) **Procédé de protection d'un condenseur contre la surchauffe**
Verfahren zum Schutz eines Kondensators gegen Überhitzung
Method for protecting a condenser against overheating

(30) Priorité: 23.04.2013 FR 1353701
(43) Date de publication de la demande: 29.10.2014
(73) Titulaire: Guillot Industrie, 01190 Pont de Vaux (FR)
(72) Inventeur: CHAPUIS, David, 01310 CONFRANCON (FR); RENARD, Jérôme, 71000 MACON (FR)
(74) Mandataire: Petit, Maxime

(56) Documents cités:
- WO-A1-2008/014626
- WO-A1-2009/003244
- AT-B- 413 758
- US-A1- 2003 005 892
- US-A1- 2013 025 546
- US-B1- 6 694 927

## Description

La présente invention concerne un procédé de protection d'un condenseur contre la surchauffe, notamment pour une chaudière à condensation comprenant un circuit d'eau à haute température et un circuit d'eau à basse température.

Il est connu du document WO2009/003244 un procédé de protection d'un dispositif de chauffage de l'eau d'une piscine pour maintenir une température constante de l'eau de la piscine mettant en oeuvre deux circuits hydrauliques en communication de fluide et prévoyant la régulation du taux de charge du bruleur de sorte à éviter la corrosion par condensation dans des tubes en cuivre/nickel.

Par ailleurs, les chaudières à condensation connues du type comprenant deux circuits d'eau basse et haute température, fonctionnant donc à des régimes de température différents, communément appelée chaudière à quatre piquages, comprennent un dispositif d'échange de chaleur permettant deux niveaux d'échanges thermiques, réalisés dans deux parties distinctes. Cet échange thermique a lieu entre les fumées produites par la combustion d'un combustible solide, liquide ou gazeux dans un brûleur de la chaudière et un fluide caloporteur qui sera désigné de façon générique dans le présent document par 'eau', tel que de l'eau ou un mélange d'eau et d'éthylène glycol, circulant dans les deux circuits d'eau. La première partie du dispositif d'échange, correspondant à un échangeur principal, est située en amont de la circulation des fumées, et de ce fait récupère la majeure partie de l'énergie calorifique des fumées. Après cette première étape d'échange, les fumées sont significativement refroidies mais peuvent permettre une seconde étape d'échange thermique dans la seconde partie du dispositif d'échange correspondant à un condenseur, relié directement en série avec le circuit de l'eau à basse température. La circulation de cette eau à basse température permet une récupèration des calories des fumées et de l'énergie de condensation de la vapeur d'eau des fumées.

Mais l'un des inconvénients d'un tel dispositif d'échange de chaleur réside en ce qu'en l'absence de débit dans le circuit d'eau à basse température, par exemple en été, lorsque le circuit de chauffage est arrêté, l'eau du circuit basse température stagne dans la seconde partie du dispositif d'échange. Or, lorsque la chaudière fonctionne, par exemple pour la production d'eau chaude sanitaire, les fumées qui échangent avec cette eau stagnante peuvent présenter une température telle que cette eau peut entrer en ébullition. Il existe alors un risque de surchauffe dans le condenseur qui peut ainsi être endommagé de façon irréversible par contraintes thermiques et ou par entartrage.

Une solution connue consiste à forcer l'irrigation du condenseur. Ainsi, l'eau du condenseur ayant échangée avec les fumées est évacuée du condenseur de sorte à maintenir une température inférieure à la température maximale de l'eau au dessus de laquelle le condenseur peut être endommagé. Mais cette solution représente seulement une proposition curative au problème engendré par l'absence de circulation d'eau à basse température et est coûteuse à mettre en place. Un des buts de l'invention vise à pallier l'inconvénient précité. A cet effet, l'invention propose un procédé de protection d'un condenseur tel que décrit dans la revendication 1.

Ce procédé permet ainsi de limiter la température des fumées générées par le brûleur en sortie d'échangeur principal de manière à ce que l'eau dans le condenseur ne dépasse pas une valeur seuil. Lors du fonctionnement du circuit d'eau à basse température, l'eau circule dans le condenseur et conserve ainsi une température inférieure à la valeur T1, sauf disfonctionnement. Ainsi, la limitation L du taux de charge du brûleur n'est pas activée. Lorsque le circuit d'eau à basse température est arrêté et que le brûleur se met en fonctionnement, par exemple pour alimenter le circuit d'eau à haute température pour produire de l'eau chaude sanitaire, l'eau stagnante à basse température dans le condenseur reste à une température inférieure à T1 pendant les premières minutes, si bien que le brûleur peut travailler à pleine charge et satisfaire le besoin en eau à haute température. Une fois que la température de l'eau stagnante est comprise entre les températures seuil T1 et T3, une limitation du taux de charge du brûleur est mise en place de manière à ce que le condenseur ne subisse pas d'endommagement.

On entend par l'expression 'quatre piquages' dans le présent document quatre orifices une paire d'orifice d'entrée et d'orifice de sortie d'eau pour chacun des circuits d'eau.

On entend également dans le présent document par l'expression chaudière à quatre piquages, une chaudière comprend deux parties d'échange de chaleur distinctes. Une première partie comprenant un échangeur et un circuit d'eau haute température et une seconde partie comprenant un condenseur et un circuit d'eau basse température.

Avantageusement, le taux de charge du brûleur est limité selon une fonction linéaire des valeurs de ladite température comprise entre T1 et T2 avec T1 < T2 < T3 et T2 correspondant à un taux de charge minimal Cm du brûleur. Le taux de charge minimal du brûleur peut être compris entre environ 2 et 50 % selon la conception de la chaudière. Le taux de charge minimal du brûleur peut correspondre par exemple au taux en-dessous duquel la stabilité de la flamme du brûleur n'est plus assurée, ou permettant d'éviter la condensation dans l'échangeur principal quand celui-ci ne l'accepte pas.

Ainsi, la limitation du taux de charge du brûleur est progressivement appliquée selon l'augmentation de la température mesurée entre T1 et T2.

De préférence, lorsque la température est comprise entre T2 et une valeur inférieure à T3, la limitation du taux de charge du brûleur est constante.

De préférence, le fonctionnement du brûleur est interrompu lorsque ladite température de l'eau atteint la valeur T3. Cette valeur n'est atteinte qu'en cas de disfonctionnement grave de la chaudière, si bien que cette disposition permet une mise hors circuit automatique de sécurité de la chaudière. Le taux de charge du brûleur est alors nul.

Avantageusement, la mesure de la température de l'eau est effectuée directement, dans une région représentative de la température maximale du condenseur tel qu'une boite à eau supérieure. En effet, en l'absence de débit d'irrigation, les mouvements de convection naturelle garantissent que la mesure de la température de l'eau dans la boite à eau supérieure est représentative de la température maximale de l'eau dans l'ensemble du condenseur.

Selon une variante de réalisation, la mesure de la température de l'eau est effectuée indirectement par la mesure de la température des fumées générées par le brûleur et ayant traversé le condenseur. En absence de circulation d'eau à basse température dans le condenseur, il peut être estimé que la température des fumées refroidies par l'eau stagnante du condenseur est représentative de la température de cette eau. Ainsi, au-delà d'une température des fumées estimées comme correspondant à une température T1 de l'eau, le taux de charge du brûleur est limité, de façon linéaire avec la variation de ladite température entre T1 et T2.

De préférence, un coefficient de correction variable est appliqué à la mesure de la température des fumées de sorte à améliorer la mesure de ladite température de l'eau. En effet, la température des fumées ayant traversé le condenseur n'est pas exactement identique à la température de l'eau du condenseur si bien que ce facteur correctif permet de corriger l'approximation de mesure. Les températures des fumées étant légèrement plus élevées que la température de l'eau stagnante, cette disposition évite une limitation inutile du taux de charge du brûleur et autorise une plage de fonctionnement plus large.

Avantageusement, le coefficient de correction est réduit avec la diminution du taux de charge. En effet, il a été observé que l'écart entre la température des fumées et celle de l'eau dans la boite à eau supérieure était plus important autour de la valeur T1 que de la valeur T2. Ce facteur correctif est alors choisi pour être une variable ajustée avec l'évolution du taux de charge brûleur.

De préférence, la limitation du taux de charge du brûleur est effectuée par un dispositif permettant une régulation électronique. Ce dispositif participe alors à la gestion totalement automatique du contrôle du taux de charge du brûleur.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 illustre une vue schématique des circuits d'eau à haute et à basse température d'une chaudière à condensation à quatre piquages connue.
La figure 2 illustre un diagramme d'évolution de la limitation L du taux de charge du brûleur en fonction de la température de l'eau dans le condenseur selon un mode de réalisation de l'invention.
La figure 3 illustre un diagrammme représentatif de l'évolution du taux de charge maximale du brûleur autorisé en fonction de la température de l'eau dans le condenseur selon le mode de réalisation de l'invention.

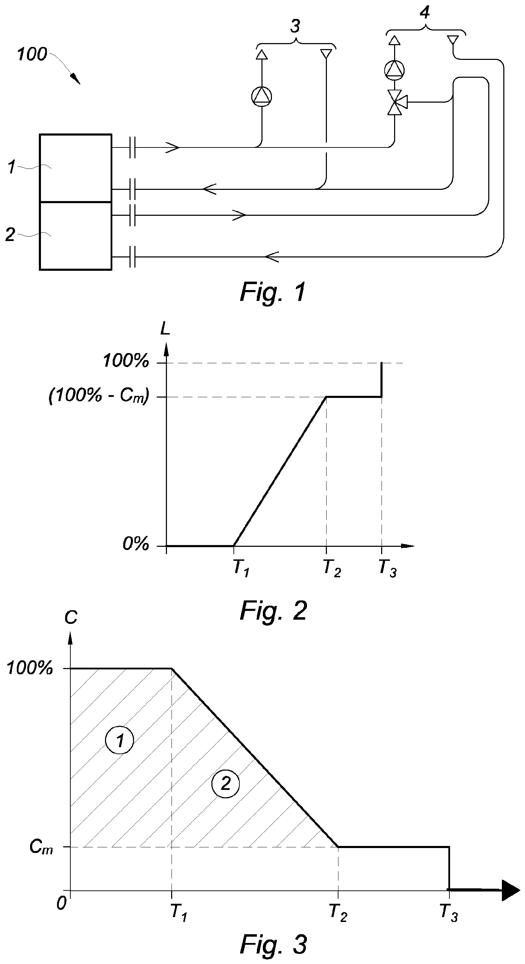

Comme illustré à la figure 1, la chaudière à condensation à quatre piquages comprend un dispositif d'échange 100 de chaleur compartimenté en deux parties. Dans une première partie, il comprend un échangeur 1 permettant une première étape d'échange thermique entre les fumées générées par un brûleur de la chaudière et un circuit d'eau à haute température 3. Dans une seconde partie, le dispositif d'échange 100 comprend un condenseur 2 permettant une seconde étape d'échange thermique, entre les fumées et un circuit d'eau à basse température 4, par refroidissement et condensation de la vapeur d'eau des fumées.

Selon une possibilité parmi d'autres, le condenseur 2 peut comprendre des tubes adaptés à la circulation de l'eau (non illustré). L'extrémité inférieure de chacun des tubes débouchent dans une boite à eau inférieure présentant une ouverture d'entrée reliée fluidiquement au circuit d'eau à basse température 4 de la chaudière. L'extrémité supérieure de chacun des tubes débouche dans une boite à eau supérieure, également reliée au circuit d'eau à basse température 4. L'eau basse température circulant dans les tubes du condenseur 2 est échauffée par les fumées générées par le brûleur de la chaudière. Dans un mode de fonctionnement normal, c'est à dire un mode dans lequel le circuit d'eau à basse température 4 est alimenté, l'eau circule de la boite à eau inférieure vers les tubes puis dans la boite à eau supérieure vers une sortie reliée au circuit d'eau à basse température 4, tout en récupérant les calories des fumées.

Lorsque le fonctionnement de la chaudière est limité à la production d'eau chaude sanitaire, en été notamment, il n'y a plus de débit d'irrigation dans le circuit d'échange à basse température 4. Les fumées générées par le brûleur réchauffent l'eau stagnant dans les tubes.

Selon une possibilité, un moyen de mesure direct de la température de l'eau dans la boite à eau supérieure, telle qu'une thermo sonde par exemple, enregistre les variations de la température de l'eau du condenseur 2. Si ladite température s'élève et atteint une valeur T1, par exemple de 85°C, un dispositif de régulation électronique limite le taux de charge du brûleur (figure 2, L étant la limitation du taux de charge) de façon totalement automatisée. Lorsque la température de l'eau continue d'augmenter jusqu'à atteindre une valeur T2, par exemple de 90°C, symbolisant un taux de charge minimal Cm du brûleur (figure 3), le dispositif de régulation électronique limite le taux de charge du brûleur selon une fonction linéaire de ladite température.

Lorsque la température de l'eau continue d'augmenter jusqu'à approcher d'une valeur T3, par exemple de 95°C, symbolisant un disfonctionnement de la chaudière, le dispositif de régulation électronique limite le taux de charge du brûleur à son taux de charge minimal Cm. Cette valeur peut varier entre 2 et 50% selon la conception des chaudières

Si la température de l'eau atteint T3, la limitation L atteint une valeur de 100% de manière à placer la chaudière en arrêt de sécurité.

Comme illustré à la figure 3, pour une température de l'eau dans le condenseur inférieure à T1, le taux de charge du brûleur n'est pas limité, il peut prendre toutes les valeurs selon les besoins en chauffage, eau chaude sanitaire...etc, au-delà de la valeur minimale seuil (zone hachurée 1 sur la figure 3). Entre une température T1 et T2, le taux de charge est limité selon une fonction linéaire de la température, c'est-à-dire qu'il peut prendre une valeur comprise entre la limite supérieure et la valeur de taux de charge minimal Cm (illustrée par la zone hachurée 2 sur la figure 3). Au-delà de T2, qui correspond au taux de charge minimal Cm seuil du brûleur, la limitation du taux de charge reste constante et à T3, le brûleur est éteint.

D'une façon générale, la puissance nécessaire pour assurer la production d'eau sanitaire ne dépasse pas 70 % de la puissance de la chaudière, de sorte qu'en été, en absence de chauffage, une limitation du taux de charge de 30% n'impacte pas la production d'eau chaude sanitaire. Ainsi, une telle limitation permet d'éviter l'augmentation de la température de l'eau stagnante dans le condenseur, tout en permettant de satisfaire les besoins de production d'eau chaude sanitaire.

Selon une variante de réalisation, la chaudière comprend un moyen de mesure indirect de la température de l'eau du condenseur 2. Une thermo sonde, par exemple, mesure la température des fumées à la sortie du condenseur 2. Cette température étant très voisine de celle de l'eau de la boite à eau supérieure du condenseur 2, lorsque la température des fumées atteint T1, un dispositif de régulation électronique limite le taux de charge du brûleur. Le pourcentage de limitation imposé varie selon une fonction linéaire de la température des fumées (figure 2) et ce jusqu'à atteindre le taux de charge minimal Cm de la chaudière, comme dans le cas de la mesure directe de la température de l'eau. Si la température des fumées atteint T3, la chaudière est arrêtée pour une mise en sécurité.

Cette mesure indirecte de la température de l'eau du condenseur 2 peut être améliorée par l'application d'un coefficient de correction à la mesure de la température des fumées de sorte à affiner l'approximation de la température de l'eau. Ce coefficient de correction est notamment réduit avec la diminution du taux de charge pour prendre en compte la variation de l'écart observé entre la température réelle de l'eau dans la boite à eau supérieure et la température des fumées mesurées. Ce coefficient de correction affine l'extrapolation de la température de l'eau et autorise une plage de fonctionnement plus large du brûleur.

Ainsi, la présente invention propose un procédé facile à mettre en place et peu coûteux qui permet d'agir sur le taux de charge du brûleur de la chaudière de sorte à limiter la température dans le condenseur 2 et éviter son endommagement.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Procédé de protection d'un condenseur (2) contre la surchauffe pour une chaudière à condensation comprenant un circuit d'eau à haute température (3), un circuit d'eau à basse température (4) et un brûleur, le procédé comprenant des étapes consistant à :
- mesurer la température de l'eau dans le condenseur (2), et
- limiter le taux de charge du brûleur,
**caractérisé en ce que** la chaudière a condensation comporte quatre piquages du type comprenant un circuit d'eau à haute température (3) configuré de sorte à réaliser un échange thermique avec un échangeur de la chaudière, un circuit d'eau à basse température (4) configuré de sorte à réaliser un échange thermique avec le condenseur (2) et **en ce que** le taux de charge du brûleur est limitée lorsque ladite température de l'eau dans le condenseur (2) est comprise entre une valeur supérieure ou égale à T1 et une valeur strictement inférieure à T3 avec T3 > T1, T1 représentant une température en dessous de laquelle une limitation du taux de charge du brûleur n'est pas activée et T3 représentant une température symbolisant un disfonctionnement de la chaudière.

2. Procédé selon la revendication 1, **caractérisé en ce que** le taux de charge du brûleur est limité selon une fonction linéaire des valeurs de ladite température comprise entre T1 et T2 avec T1 < T2 < T3 et T2 correspondant à un taux de charge minimal Cm du brûleur.

3. Procédé selon l'une des revendications 1 à 2, caractérisé en ce le fonctionnement du brûleur est interrompu lorsque ladite température de l'eau atteint la valeur T3.

4. Procédé selon l'une des revendications 1 à 3, **caractérisé en ce que** la mesure de la température de l'eau est effectuée directement, dans une région représentative de la température maximale du condenseur, telle qu'une boite à eau supérieure du condenseur (2).

5. Procédé selon l'une des revendications 1 à 4, **caractérisé en ce que** la mesure de la température de l'eau est effectuée indirectement par la mesure de la température des fumées générées par le brûleur et ayant traversé le condenseur (2).

6. Procédé selon la revendication 5, **caractérisé en ce qu'**un coefficient de correction variable est appliqué à la mesure de la température des fumées de sorte à améliorer la mesure de ladite température de l'eau.

7. Procédé selon la revendication 6, **caractérisé en ce que** le coefficient de correction est réduit avec la diminution du taux de charge.

8. Procédé selon l'une des revendications 1 à 7, **caractérisé en ce que** la limitation du taux de charge du brûleur est effectuée par un dispositif permettant une régulation électronique.

## Patentansprüche

1. Verfahren zum Schutz eines Kondensators (2) gegen Überhitzung für einen Brennwertkessel, umfassend einen Hochtemperatur-Wasserkreilauf (3), einen Niedertemperatur-Kreislauf (4) und einen Brenner, wobei das Verfahren die Schritte umfasst, die aus Folgendem bestehen:
- Messen der Temperatur des Wassers im Kondensator (2), und
- Begrenzen der Besatzrate des Brenners,
**dadurch gekennzeichnet, dass** der Brennwertkessel vier Steppungen vom Typ umfasst, umfassend einen Hochtemperatur-Wasserkreilauf (3), der derart konfiguriert ist, dass er einen Wärmetausch mit einem Tauscher des Kessels durchführt, einen Niedertemperatur-Wasserkreislauf (4), der derart konfiguriert ist, dass er einen Wärmetausch mit dem Kondensator (2) durchführt, und dadurch, dass die Besatzrate des Brenners begrenzt ist, wenn die Temperatur des Wassers im Kondensator (2) zwischen einem Wert über oder gleich T1 und einem Wert streng unter T3 liegt, mit T3 > T1, wobei T1 eine Temperatur darstellt, unter der eine Begrenzung der Besatzrate des Brenners nicht aktiviert ist und T3 eine Temperatur darstellt, die eine Funktionsstörung des Kessels symbolisiert.

2. Verfahren nach Anspruch 1, **dadurch gekennzeichnet, dass** die Besatzrate des Brenners gemäß einer linearen Funktion der Werte der Temperatur, die zwischen T1 und T2 liegt, begrenzt ist, mit T1< T2 < T3, und wobei T2 einer minimalen Besatzrate Cm des Brenners entspricht.

3. Verfahren nach einem der Ansprüche 1 bis 2, **dadurch gekennzeichnet, dass** die Funktion des Brenners unterbrochen wird, wenn die Temperatur des Wassers den Wert T3 erreicht.

4. Verfahren nach einem der Ansprüche 1 bis 3, **dadurch gekennzeichnet, dass** die Messung der Temperatur des Wassers direkt durchgeführt wird in einem Bereich, der für die maximale Temperatur des Kondensators repräsentativ ist, wie z. B. einem Wasserkasten über dem Kondensator (2).

5. Verfahren nach einem der Ansprüche 1 bis 4, **dadurch gekennzeichnet, dass** die Messung der Temperatur des Wassers indirekt durchgeführt wird durch die Messung der Temperatur der Dämpfe, die vom Brenner generiert werden und den Kondensator (2) durchquert haben.

6. Verfahren nach Anspruch 5, **dadurch gekennzeichnet, dass** ein variabler Korrekturkoeffizient auf die Messung der Temperatur der Dämpfe angewendet wird, um die Messung der Temperatur des Wassers zu verbessern.

7. Verfahren nach Anspruch 6, **dadurch gekennzeichnet, dass** der Korrekturkoeffizient mit der Verringerung der Besatzrate reduziert wird.

8. Verfahren nach einem der Ansprüche 1 bis 7, **dadurch gekennzeichnet, dass** die Begrenzung der Besatzrate des Brenners durch eine Vorrichtung durchgeführt wird, die eine elektronische Regulierung ermöglicht.

## Claims

1. A method for protecting a condenser (2) against overheating for a condensation boiler comprising a high temperature water circuit (3), a low temperature water circuit (4) and a burner, the method comprising the following steps:
- measuring the temperature of the water in the condenser (2), and
- limiting the charge rate of the burner,
**characterized in that** the condensation boiler has four branches of the type comprising a high-temperature water circuit (3) configured so as to perform a heat exchange with an exchanger of the boiler, a low-temperature water circuit (4) configured so as to perform a heat exchange with the condenser (2) and **in that** the charge rate of the burner is limited when said temperature of the water in the condenser (2) is comprised between a value greater than or equal to T1 and a value strictly less than T3 with T3 > T1, T1 representing a temperature below which a limitation of the charge rate of the burner is not activated and T3 representing a temperature symbolizing a malfunction of the boiler.

2. The method according to claim 1, **characterized in that** the charge rate of the burner is limited according to a linear function of the values of said temperature comprised between T1 and T2 with T1 < T2 < T3 and T2 corresponding to a minimal charge rate Cm of the burner.

3. The method according to one of claims 1 to 2, **characterized in that** the operation of the burner is interrupted when said temperature of the water reaches the value T3.

4. The method according to one of claims 1 to 3, **characterized in that** the measurement of the temperature of the water is done directly, in a region representative of the maximum temperature of the condenser, such as an upper radiator tank of the condenser (2).

5. The method according to one of claims 1 to 4, **characterized in** the measurement of the temperature of the water is done indirectly by measuring the temperature of the fumes generated by the burner and having traversed the condenser (2).

6. The method according to claim 5, **characterized in that** a variable correction coefficient is applied to the measurement of the temperature of the fumes so as to improve the measurement of said temperature of the water.

7. The method according to claim 6, **characterized in that** the correction coefficient is reduced with the decrease of the charge rate.

8. The method according to one of claims 1 to 7, **characterized in that** the limitation of the charge rate of the burner is done by a device allowing an electronic regulation.
